# DEMANDE DE BREVET EUROPEEN

(11) **EP 0 965 572 A1**
(43) Date de publication de la demande: **22.12.1999**
(21) Numéro de dépôt: 99401464.5
(22) Date de dépôt: 15.06.1999
(51) Int. Cl.: C03C 25/02, G02B 6/44, G02B 6/16

(54) **Fibre munie d'un revêtement de protection et procédé de fabrication de cette fibre**

(30) Priorité: 17.06.1998 FR 9807631
(71) Demandeur: FORT FIBRES OPTIQUES RECHERCHE ET TECHNOLOGIE, F-91410 Dourdan (FR)
(72) Inventeur: Fort, François, 75007 Paris (FR)
(74) Mandataire: Jacquard, Philippe Jean-Luc

(57) **Abrégé**

La présente invention se rapporte principalement à une fibre, notamment à une fibre optique comportant un guide de lumière, munie d'un revêtement de protection comportant au moins une couche d'un oligomère de polydiène époxydé réticulé, ainsi qu'à un procédé de fabrication d'une telle fibre.

## Description

La présente invention se rapporte à des fibres munies d'un revêtement de protection hydrophobe, à un câble comprenant au moins une telle fibre entourée d'une gaine de protection et à un procédé de réalisation de ces fibres.

L'invention se rapporte également à des fibres optiques munies d'un revêtement de protection hydrophobe, ainsi qu'à un procédé de réalisation d'un dispositif d'interconnexion à fibres optiques.

Les fibres optiques comportent un guide de lumière qui, comme son nom l'indique, a pour rôle de conduire l'onde lumineuse.

Quand ce guide de lumière est réalisé en silice, il est fondamental de protéger cette silice contre les agressions des agents chimiques présents dans l'environnement extérieur, normalement ou de façon accidentelle. En particulier, l'humidité (de façon plus précise, les ions OH⁻) fragilise la silice ou le quartz des fibres optiques en pénétrant dans les microporosités inhérentes à sa structure cristalline, détériorant ainsi les qualités optiques du guide de lumière. L'attaque chimique de la silice, accélérée par les contraintes mécaniques (flexion, traction...) subies par la fibre optique, constitue dans le temps des points d'amorce de cassure du guide de lumière.

Différents revêtements de protection ont été proposés afin de remédier à ces inconvénients. Ainsi, il est connu de pourvoir les fibres optiques en silice d'un revêtement en résine époxy acrylate. Ce dernier est appliqué immédiatement après l'étirage de la fibre optique, voire de façon simultanée. Il permet d'éviter l'oxydation du quartz étiré et de boucher les microporosités présentes dans la fibre, à laquelle il confère une résistance mécanique accrue.

Toutefois, l'époxy acrylate présente l'inconvénient d'être perméable aux ions OH⁻, et donc soluble à l'eau, et à l'humidité, ce qui entraîne une destruction ou un boursouflement de l'époxy acrylate protégeant la fibre, la protection contre l'environnement extérieur perdant alors son efficacité avec le temps.

De ce fait, la fibre optique revêtue d'époxy acrylate est normalement disposée dans des micro-tubes enduits d'une gelée de pétrole afin de la protéger des effets indésirés de l'humidité.

Toutefois, une telle structure présente une résistance mécanique extrêmement mauvaise en raison de la présence du micro-tube de protection, qui est par ailleurs sujet à des pliures et présente une élasticité qui se prête mal à une protection efficace de la fibre.

En outre, le système de protection par micro-tube enduit de gelée de pétrole ne permet pas une très forte densité de fibre (à savoir, un nombre important de fibres par câble), et ce en raison du diamètre du micro-tube qu'il est nécessaire d'adopter pour permettre le dépôt de la gelée. A titre d'exemple, il suffit de signaler que, pour une fibre optique qui ne fait que 250 µm, les tubes présentent un diamètre de 1,5 à 2,5 mm.

Il a également été proposé de revêtir la fibre optique d'un film de silicone réticulable aux rayons ultraviolets (UV), tel que décrit dans le brevet FR 2 628 847. Cependant, les silicones présentent une forte affinité avec l'eau. Il est donc nécessaire de prévoir une gaine externe en une matière plastique rigide, par exemple en polyétherimide. Cette gaine externe présente l'inconvénient d'accroître le diamètre de la fibre jusqu'à 1 mm, un tel diamètre, encore une fois, ne permettant pas une très forte densité de fibre dans les câbles.

De plus, les silicones étant polluants, il est nécessaire d'en assurer le recyclage après utilisation des fibres

Un inconvénient commun à toutes les solutions de l'Art Antérieur est l'incompatibilité entre le quartz de la fibre optique et le revêtement de protection adopté pour celle-ci, résultant en une adhérence insuffisante du revêtement de protection, qui est appliqué de façon lâche sur la fibre optique.

La présente invention s'est donc donnée pour but de pourvoir à une fibre, notamment une fibre optique, et à un câble comportant au moins une telle fibre qui répondent mieux aux nécessités de la pratique que les fibres du même type connues antérieurement, tout en ayant un faible prix de revient, notamment en ce que la fibre selon l'invention comporte un revêtement qui :
- présente une résistance chimique au milieu extérieur améliorée, notamment envers l'eau et l'humidité,
- présente une résistance mécanique améliorée, pour un diamètre donné,
- est compatible chimiquement avec le coeur de la fibre, notamment avec le quartz, tout en interagissant avec celui-ci de manière à donner lieu à une interaction efficace avec le quartz.

La présente invention a pour objet une fibre munie d'un revêtement de protection, caractérisée en ce que ledit revêtement de protection comporte au moins une couche d'un oligomère de polydiène époxydé réticulé.

On peut citer, à titre d'exemples et de façon non limitative, les fibres textiles (polyesters, polyamides, polyuréthannes), les fibres métalliques (acier, cuivre, aluminium) et les fibres de verre (utilisables, par exemple, en tant que renfort pour divers matériaux, et ce quel que soit leurs domaines d'applications). Tout corps allongé souple quel qu'il soit, muni du revêtement de protection sus-mentionné, est également compris dans le cadre de la présente invention.

Avantageusement, l'épaisseur de ladite couche d'un oligomère de polydiène époxydé réticulé est comprise entre 20 et 60 µm, de préférence entre 20 et 40 µm

L'oligolimère de polydiène epoxydé est tel que décrit dans la Demande de Brevet EP 0 859 038. Ainsi, l'oligomère de polydiène époxydé possède par exemple une masse moléculaire en nombre Mn comprise entre 500 et 10000 g/mole, de préférence entre 1000 et 5000 g/mole.

Le diène, monomère de base du polydiène, est un diène conjugué qui peut être sélectionné dans le groupe comprenant le butadiène, l'isoprène, le chloroprène, le 1,3-pentadiène et le cyclopentadiène.

L'oligomère de polydiène époxydé peut être fonctionnalisé en bout de chaîne par des fonctions hydroxyles ou époxydes, cette fonctionnalisation permettant d'augmenter le nombre de fonctions réactives lors de la réticulation.

L'oligomère de polydiène époxydé peut également être partiellement hydrogéné.

L'oligomère de polydiène époxydé est par exemple un polybutadiène hydroxytéléchélique, c'est-à-dire un polybutadiène fonctionnalisé en bout de chaîne par des fonctions hydroxyles, comportant au plus 25 % de fonctions époxydes sur la chaîne, de préférence environ 1 à 8 %, et comprenant, avant époxydation, 70 à 80 %, de préférence 75 %, de motifs 1,4.

La viscosité de l'oligomère de polydiène époxydé est par exemple inférieure à 100 Pa.s à 30°C, de préférence inférieure à 40 Pa.s à 30°C.

On peut citer notamment les Poly Bd 600/605 de la société Elf Atochem, le Poly Bd R 45 EPI de la société Idemitsu Petrochemical et les Kraton Liquid Polymer EKP 206 et 207 de la société Shell.

L'oligomère de polydiène époxydé peut également comprendre des comonomères vinyliques et/ou acryliques, tels que le styrène et l'acrylonitrile.

Des additifs, tels que des diluants réactifs, des agents mouillants, débullants, antioxydants, anti-UV, des agents d'étalement, des agents rhéologiques, des solvants, des plastifiants et des colorants peuvent être ajouté à l'oligomère de polydiène époxydé.

On entend par "diluant réactif" une composition formée par des petites molécules liquides, de basse viscosité (entre 5.10^{.3} et 40.10^{.3} Pa.s à 25°C), à faible tension de vapeur et aux points éclair et d'ébullition élevés, dont le rôle est de réduire la viscosité des oligomères de polydiène époxydé. Le diluant réactif permet, en outre, d'augmenter le taux pondéral de fonctions réactives de l'oligomère de polydiène époxydé.

On entend également par "agent mouillant" une substance chimique capable d'abaisser les tensions superficielles et interfaciales d'un milieu liquide, résultant ainsi en une augmentation de la dispersion du liquide sur une surface déterminée.

Le diluant réactif peut être un époxy cycloaliphatique difonctionnel (commercialisé, par exemple, par 3M sous la référence cyracure UVR 6110) ou un éther vinylique (par exemple le 1,4-butanediol-monovinyléther), alors que l'agent mouillant peut être, par exemple, un tensioactif fluoré, tel que le "fluorad" commercialisé par Borlöcher.

Selon un mode de réalisation préféré de la fibre selon l'invention, ladite fibre est une fibre optique en plastique ou en silice comportant un guide de lumière, ledit guide de lumière étant avantageusement réalisé en silice dopée du germanium.

Parmi les différents types de fibres optiques utilisables, on peut citer les fibres monomode et les fibres multimodes. Les fibres optiques selon l'invention peuvent être destinées à des applications variées, telle que la transmission de lumière pour l'éclairage d'endroits inaccessibles et/ou la transmission d'informations (transmission d'informations analogiques et/ou numériques, télécommunications, informatique).

Le revêtement décrit ci-dessus est à la fois adhérent et mécaniquement résistant, tout en conservant la souplesse requise pour les utilisations ultérieures de la fibre, et est sans odeur prononcée.

Dans le cas où la fibre selon l'invention est une fibre optique en silice, le revêtement de protection comportant au moins une couche d'un oligomère de polydiène époxydé réticulé, tel que décrit précédemment, est particulièrement accrochant vis-à-vis du guide de lumière. L'adhérence extrême de l'oligomère de polydiène époxydé réticulé confère à la fibre optique une étanchéité parfaite, à un tel point que le guide de lumière ne pourra être dénudé que par attaque chimique, si nécessaire, notamment en vue de son introduction dans un connecteur de diamètre adapté.

La fibre optique comportant le revêtement de protection selon l'invention présente effectivement une étanchéité nettement améliorée à l'eau et à l'humidité. Par rapport à un revêtement en silicone, par exemple, l'étanchéité est améliorée de 50 %.

Selon un mode de réalisation avantageux de la fibre selon l'invention, ledit revêtement de protection comporte, disposée entre ladite fibre et ladite couche d'un oligomère de polydiène époxydé réticulé, au moins une couche réalisée en un matériau réticulé dont l'adhérence à la fibre est inférieure à l'adhérence à la fibre dudit oligomère de polydiène époxydé réticulé et qui est compatible avec ce dernier.

Au sens de la présente invention, on entend par "compatible" une compatibilité chimique entre les deux couches précitées. De préférence, cette compatibilité résulte en une interpénétration des deux matériaux par la migration des chaînes macromoléculaires des deux couches les unes vers les autres.

En variante, la couche intermédiaire disposée entre la fibre et la couche d'un oligomère de polydiène époxydé réticulé n'est présente que localement sur la fibre, aux endroits susceptibles de former des extrémités de la fibre ; par exemple, si ladite fibre est une fibre optique, ces extrémités peuvent être destinées à être insérées dans des connecteurs.

De façon générale, tout matériau permettant de protéger la fibre (par exemple, de protéger la fibre optique au moment de son étirage) et de procéder à son dénudage est utilisable en tant que couche intermédiaire telle que définie ci-dessus. Dans le cas d'une fibre optique, outre le fait de protéger la fibre au moment de son étirage et de faciliter son dénudage, la présence de la couche intermédiaire telle que définie ci-dessus permet de limiter les fuites optiques de la fibre.

Avantageusement, la couche disposée entre la fibre et la couche d'un oligomère de polydiène époxydé réticulé est un matériau réticulé aux UV sélectionné dans le groupe constituée par un époxy acrylate et un oligomère de polydiène semi-adhérent. Son épaisseur est avantageusement comprise entre 10 et 100 µm, de préférence entre 20 et 60 µm.

Au sens de la présente invention, on qualifie de "semi-adhérent" un oligomère de polydiène dont l'adhérence à la fibre est inférieure à l'adhérence à la fibre de l'oligomère de polydiène époxydé réticulé constituant la couche radialement externe du revêtement de protection de ladite fibre. Ainsi, l'oligomère de polydiène semi-adhérent permet le dénudage, par simple ablation mécanique du revêtement de protection, de la fibre.

Selon un autre mode de réalisation préféré de la fibre selon l'invention, ledit revêtement de protection est muni d'un marquage par un colorant.

Ledit colorant est avantageusement incorporé dans la couche d'un oligomère de polydiène époxydé réticulé telle que définie ci-dessus.

En variante, ledit marquage par un colorant est réalisé par la présence d'une couche de colorant immédiatement voisine de ladite couche d'un oligomère de polydiène époxydé réticulé et disposée de façon radialement interne par rapport à ladite couche d'un oligomère de polydiène époxydé réticulé. La couche d'un oligomère de polydiène époxydé réticulé étant transparente, la présence d'une couche de colorant, de façon radialement interne par rapport à cette couche, est visible et permet d'identifier la fibre par sa couleur parmi un ensemble de fibres colorées de manières différentes.

Selon cette variante, ladite couche de colorant comprend un colorant incorporé dans de l'époxy acrylate réticulé aux UV. Son épaisseur est comprise entre 3 et 10 µm.

De façon particulièrement avantageuse, une fibre selon l'invention est telle qu'elle comprend :
- un guide de lumière,
- au moins une couche, radialement la plus externe, d'un oligomère de polydiène époxydé réticulé,
- au moins une couche, disposée sur ledit guide de lumière et radialement la plus interne, réalisée en un matériau réticulé dont l'adhérence au guide de lumière est inférieure à l'adhérence au guide de lumière dudit oligomère de polydiène époxydé réticulé et qui est compatible avec ce dernier, et
- une couche de colorant telle que définie ci-dessus, disposée entre ladite couche d'un oligomère de polydiène époxydé réticulé et ladite couche réalisée en un matériau réticulé dont l'adhérence au guide de lumière est inférieure à l'adhérence au guide de lumière dudit oligomère de polydiène époxydé réticulé et qui est compatible avec ce dernier.

La fibre optique selon l'invention est suffisamment hermétique et solide pour être utilisée sans gainage extérieur supplémentaire. Elle peut aussi être insérée telle quelle dans un câble optique comprenant un faisceau de fibres selon l'invention.

La présente invention a donc également pour objet un câble, caractérisé en ce qu'il comprend au moins une fibre telle que définie précédemment, entourée d'une gaine de protection.

La présente invention a également pour objet un câble multifibres, caractérisé en ce qu'il comprend au moins deux fibres optiques colorées avec au moins deux couleurs différentes, telles que définies précédemment, entourées d'une gaine de protection, chaque fibre optique étant colorée, sur toute sa longueur, de manière à permettre l'identification de chaque fibre aux extrémités dudit câble.

La présente invention a également pour objet un procédé de fabrication d'une fibre telle que définie précédemment, caractérisé en ce qu'il comprend au moins une étape de dépôt sur une fibre d'une couche d'un oligomère de polydiène époxydé, ledit dépôt étant suivi d'une étape de réticulation de cette couche.

L'étape de réticulation peut être effectuée, par exemple, par irradiation UV, ou encore par voie chimique ou par chauffage, notamment au moyen de micro-ondes, d'ondes électromagnétiques, de faisceaux d'électrons.

Selon une disposition avantageuse de ce mode de mise en oeuvre, l'étape de dépôt sur ladite fibre d'une couche d'un oligomère de polydiène époxydé est précédée d'une étape d'étirage de ladite fibre.

Selon une autre disposition avantageuse de ce mode de mise en oeuvre, les étapes successives d'étirage de la fibre, de dépôt sur la fibre d'une couche d'un oligomère de polydiène époxydé et de réticulation de cette couche sont réalisées en un processus continu.

De préférence, le procédé selon l'invention comprend une première étape de dépôt sur ladite fibre d'une couche d'un oligomère de polydiène époxydé et une deuxième étape de dépôt d'une couche d'un oligomère de polydiène époxydé, sur la couche précédemment déposée.

Dans ce cas, chaque étape de dépôt sur ladite fibre d'une couche d'un oligomère de polydiène époxydé est avantageusement suivie d'une étape de réticulation de cette couche, antérieurement au dépôt de la couche suivante, auquel cas la somme des énergies à fournir pour la réticulation de chaque couche est moindre que celle qu'il faudrait fournir pour réticuler l'ensemble des deux couches, en une fois.

Toutefois, il est bien entendu possible de n'effectuer qu'une seule étape de réticulation après les deux dépôts successifs sur la fibre d'une couche d'un oligomère de polydiène époxydé.

Selon un autre mode de mise en oeuvre avantageux du procédé selon l'invention, on dépose sur ladite fibre une composition qui comprend l'oligomère de polydiène époxydé, ainsi qu'au moins un sel photoamorceur et éventuellement un diluant réactif, et l'étape de réticulation est une photopolymérisation cationique effectuée par irradiation UV.

Un sel photoamorceur convenable est, par exemple, un sel susceptible de produire un acide fort sous irradiation UV afin d'amorcer la polymérisation cationique du système. De façon non limitative, on peut citer des triarylsulfonium d'hexafluorophosphore (par exemple le FX512 commercialisé par 3M) et des triarylsulfonium d'hexafluoroantimoine (par exemple le UVI 6974 commercialisé par Union Carbide).

La quantité de sel photoamorceur est fonction du nombre de fonctions époxydes et de la vitesse de polymérisation désirée.

De façon avantageuse, la quantité de sel photoamorceur est au maximum de 10 parties en poids pour 100 parties de l'oligomère de polydiène époxydé, de préférence comprise entre 0,01 et 10 parties en poids.

Selon un autre mode de mise en oeuvre avantageux du procédé selon l'invention, préalablement au dépôt sur ladite fibre d'une couche d'un oligomère de polydiène époxydé, le procédé comprend au moins une étape de dépôt d'une couche de revêtement comportant un matériau dont l'adhérence à ladite fibre est inférieure à celle de l'oligomère de polydiène époxydé réticulé et qui est compatible avec l'oligomère de polydiène époxydé, suivie d'une étape de réticulation dudit matériau.

Selon une disposition avantageuse de ce mode de mise en oeuvre, ledit procédé comprend une première étape de dépôt sur ladite fibre d'une couche de revêtement comportant un matériau dont l'adhérence à ladite fibre est inférieure à celle de l'oligomère de polydiène époxydé réticulé et qui est compatible avec l'oligomère de polydiène époxydé, et une deuxième étape de dépôt d'une couche de revêtement comportant un matériau dont l'adhérence à ladite fibre est inférieure à celle de l'oligomère de polydiène époxydé réticulé et qui est compatible avec l'oligomère de polydiène époxydé, sur la couche précédemment déposée.

Une modalité avantageuse de cette disposition consiste à faire suivre chaque étape de dépôt sur la fibre de ladite couche de revêtement d'une étape de réticulation de ce revêtement, de façon similaire à ce qui a été décrit dans le cadre des dépôts successifs sur la fibre de plusieurs couches d'un oligomère de polydiène époxydé. Toutefois, il est bien entendu possible de n'effectuer qu'une seule étape de réticulation après les deux dépôts successifs sur la fibre d'une couche de revêtement comportant un matériau dont l'adhérence à ladite fibre est inférieure à celle de l'oligomère de polydiène époxydé réticulé et qui est compatible avec l'oligomère de polydiène époxydé.

Des méthodes convenables de réticulation sont les mêmes que celles décrites précédemment, c'est-à-dire l'irradiation UV, la réticulation par voie chimique ou par chauffage (de façon non limitative, au moyen de micro-ondes, d'ondes électromagnétiques, de faisceaux d'électrons). De préférence, l'étape de réticulation est effectuée par irradiation UV de la fibre munie de son revêtement.

Selon un autre mode de mise en oeuvre avantageux du procédé selon l'invention, ce dernier comprend en outre, préalablement au dépôt d'une couche d'un oligomère de polydiène époxydé, une étape de dépôt d'une couche de colorant.

Selon encore un autre mode de mise en oeuvre avantageux du procédé selon l'invention, ce dernier comprend, postérieurement au dépôt de ladite couche réalisée en un matériau réticulé dont l'adhérence à la fibre est inférieure à l'adhérence à la fibre dudit oligomère de polydiène époxydé réticulé et qui est compatible avec ce dernier, et antérieurement au dépôt de ladite couche d'un oligomère de polydiène époxydé, une étape de dépôt d'une couche de colorant.

Selon encore un autre mode de mise en oeuvre avantageux du procédé selon l'invention, on fait passer la fibre munie d'au moins une couche d'un oligomère de polydiène époxydé dans une source de rayonnement UV ayant une longueur comprise entre 15 et 25 cm.

Selon encore un autre mode de mise en oeuvre avantageux du procédé selon l'invention, lors dudit dépôt sur la fibre des différentes couches de revêtement, la fibre défile à une vitesse comprise entre 100 et 600 m/min.

Selon encore un autre mode de mise en oeuvre avantageux du procédé selon l'invention, ladite fibre est une fibre optique comportant un guide de lumière et ledit procédé débute par une étape d'étirage dudit guide de lumière à partir d'un préforme en matière transparente, dans un four d'étirage.

La présente invention a également pour objet un procédé de réalisation d'un dispositif d'interconnexion à fibres optiques comportant une fibre optique munie, à au moins l'une de ses extrémités, d'un connecteur et comprenant un guide de lumière dont le diamètre externe est sensiblement égal au diamètre interne du connecteur, caractérisé en ce qu'il comprend :
- une étape de fabrication d'une fibre optique comportant un guide de lumière muni d'un revêtement de protection comportant au moins une couche d'un oligomère de polydiène époxydé réticulé ainsi qu'au moins une couche, disposée entre le guide de lumière et la couche d'un oligomère de polydiène époxydé réticulé, réalisée en un matériau réticulé dont l'adhérence au guide de lumière est inférieure à l'adhérence au guide de lumière de l'oligomère de polydiène époxydé réticulé et qui est compatible avec l'oligomère de polydiène époxydé,
- une étape d'obtention, à au moins l'une des extrémités de la fibre optique, d'un guide de lumière de diamètre externe sensiblement égal au diamètre interne du connecteur, par ablation mécanique, à l'une des extrémités de la fibre optique, du revêtement de protection,
- une étape d'insertion de l'extrémité dénudée du guide de lumière dans le connecteur.

Selon un mode de mise en oeuvre avantageux de ce procédé, il met en oeuvre un câble selon l'invention, tel que défini précédemment, et il comporte les étapes suivantes :
- identification, par sa couleur, d'une fibre optique à une première extrémité du câble,
- insertion de la fibre ainsi identifiée dans un premier connecteur,
- identification, à la seconde extrémité du câble, par sa couleur, de la seconde extrémité de ladite fibre,
- insertion de ladite seconde extrémité de ladite fibre dans un second connecteur.

Outre les dispositions qui précédent, l'invention comprend encore d'autres dispositions, qui ressortiront du complément de description qui va suivre, lequel se réfère aux dessins annexés, dans lesquels :
- la figure 1 est une vue en perspective d'une extrémité d'une fibre optique selon l'invention, munie d'un revêtement de protection comportant une couche unique d'un oligomère de polydiène époxydé réticulé,
- la figure 2 est une vue en perspective d'une extrémité partiellement dénudée d'une fibre optique selon l'invention, munie d'un revêtement de protection comportant deux couches,
- la figure 3 est une vue en perspective d'une extrémité partiellement dénudée d'une fibre optique selon l'invention, munie d'un revêtement de protection comportant trois couches,
- la figure 4 représente un procédé de fabrication d'une fibre munie d'un revêtement de protection comportant une couche unique d'un oligomère de polydiène époxydé réticulé,
- la figure 5 représente un procédé de fabrication de la fibre optique selon la figure 2,
- les figures 6a à 6c représentent un procédé selon la présente invention consistant à équiper la fibre selon la figure 2 d'un connecteur standardisé.

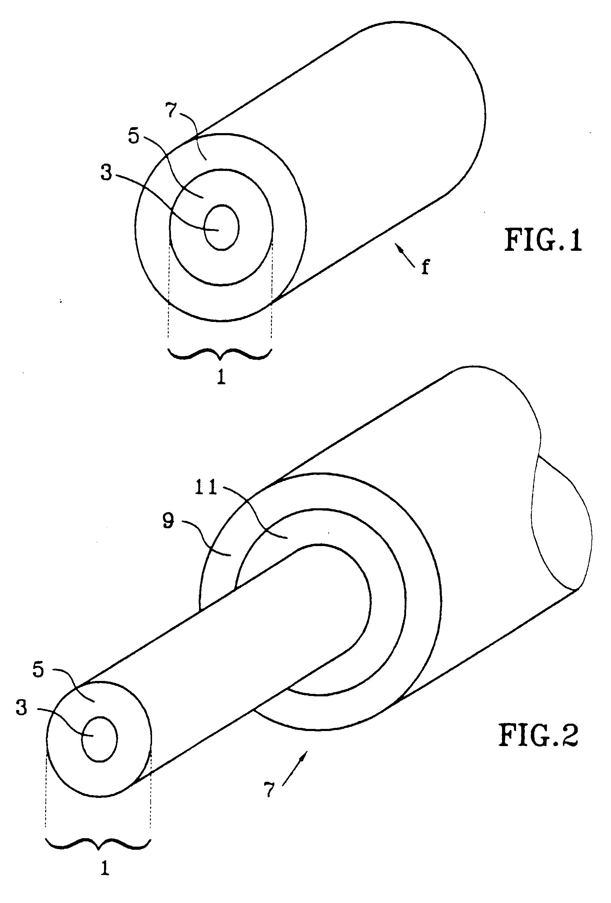

La figure 1 représente une fibre optique f qui est constituée d'un guide de lumière 1 muni d'un revêtement de protection 7. De façon classique, le guide de lumière 1 est constitué d'une âme (ou coeur) en silice dopée 3 et d'une gaine optique (ou clading, en terminologie anglo-saxonne) en silice 5.

Sur la figure 1, le revêtement de protection 7 du guide de lumière 1 comporte une seule couche, réalisée en un oligomère de polydiène époxydé, ladite couche étant réticulée par un moyen approprié, tel qu'indiqué précédemment.

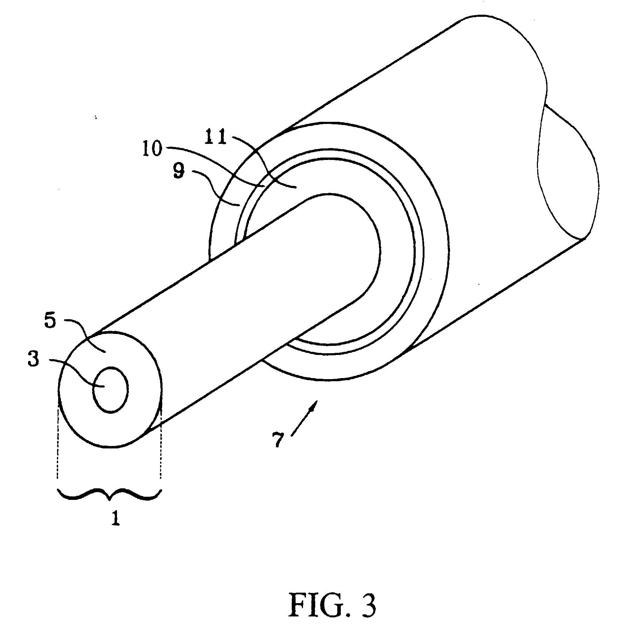

Les figures 2 et 3 représentent d'autres modes de réalisation d'une fibre optique selon la présente invention. Le guide de lumière 1 est constitué d'une âme en silice dopée 3 et d'une gaine optique en silice 5. Son diamètre externe correspond à un diamètre normalisé, par exemple égal à 125 µm. Ce guide de lumière 1 comporte un revêtement de protection 7 constitué :
- dans le cas de la figure 2 : d'une première couche 11, dont l'épaisseur est telle que le diamètre de la fibre comportant ce premier revêtement est comprise entre 135 et 300 µm, par exemple 250 µm, et d'une deuxième couche 9 constituée d'un oligomère de polydiène époxydé réticulé,
- dans le cas de la figure 3 : des deux couches 11 et 9 précitées, ainsi que d'une troisième couche 10 (couche de colorant). Le diamètre de la fibre comportant les couches 11 et 10 est par exemple de 270 µm.

La couche 9 décrite ci-dessus, de par son adhérence exceptionnelle vis-à-vis du guide de lumière, permet de combler toutes les aspérités ou microporosités présentes à la surface du guide de lumière et augmente la résistance de la fibre de plus de 30 %.

La première couche 11 (couche radialement la plus interne) est réalisée en un matériau réticulé dont l'adhérence au guide de lumière est inférieure à l'adhérence au guide de lumière de l'oligomère de polydiène époxydé réticulé et qui est compatible chimiquement avec l'oligomère de polydiène époxydé. Un tel matériau est, par exemple, un époxy acrylate ou un oligomère de polydiène semi-adhérent. Sa surface est suffisamment poreuse pour permettre une interpénétration avec la couche radialement la plus externe 9.

L'épaisseur de la fibre ainsi obtenue, c'est-à-dire du guide de lumière pourvu des revêtements 9, 11 et/ou 10, est, par exemple, de l'ordre de 380 µm, mais peut atteindre jusqu'à 500 µm ou plus. Dans ce cas, la fibre optique obtenue présente une solidité extrême et peut être utilisée comme un câble monofibre, sans gainage extérieur supplémentaire.

En variante, un groupe de fibres optiques conformes à l'invention est réuni dans une gaine de protection externe pour former un câble multifibres.

D'une façon connue en elle-même, cette gaine de protection peut comporter un élément tubulaire ou sensiblement tubulaire, ou analogue, consistant en une gaine polymérique (polyéthylène, polypropylène, polybutylène téréphtalate) éventuellement renforcée par des fibres d'époxy, d'aramide, par exemple vendues par la Société Dupont de Nemours sous la marque Kevlar®, ou des fibres de verre, et/ou une gaine externe en métal (acier, aluminium).

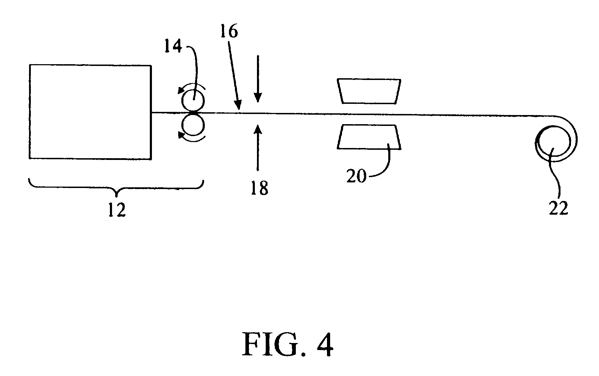

La figure 4 représente un procédé de fabrication d'une fibre souple selon l'invention, munie d'un revêtement de protection comportant une couche unique d'un oligomère de polydiène époxydé réticulé.

La fibre 16, par exemple une fibre de verre, une fibre textile, un fil métallique ou autre, est obtenue à partir du dispositif 12 d'extrusion et/ou d'étirage (rouleaux 14). Immédiatement après l'extrusion et/ou l'étirage de la fibre, un dispositif 18 permet d'appliquer une fine couche, par exemple de 20 à 60 µm d'épaisseur, d'un oligomère de polydiène époxydé, sur la fibre qui défile à grande vitesse (entre 100 et 600 m/min), comme cela sera décrit plus en détail ci-après. L'oligomère de polydiène époxydé est ensuite réticulé par le dispositif 20, qui est par exemple un four à ultraviolets. La fibre munie de son revêtement est ensuite guidée vers un dispositif de bobinage 22 en vue de son stockage.

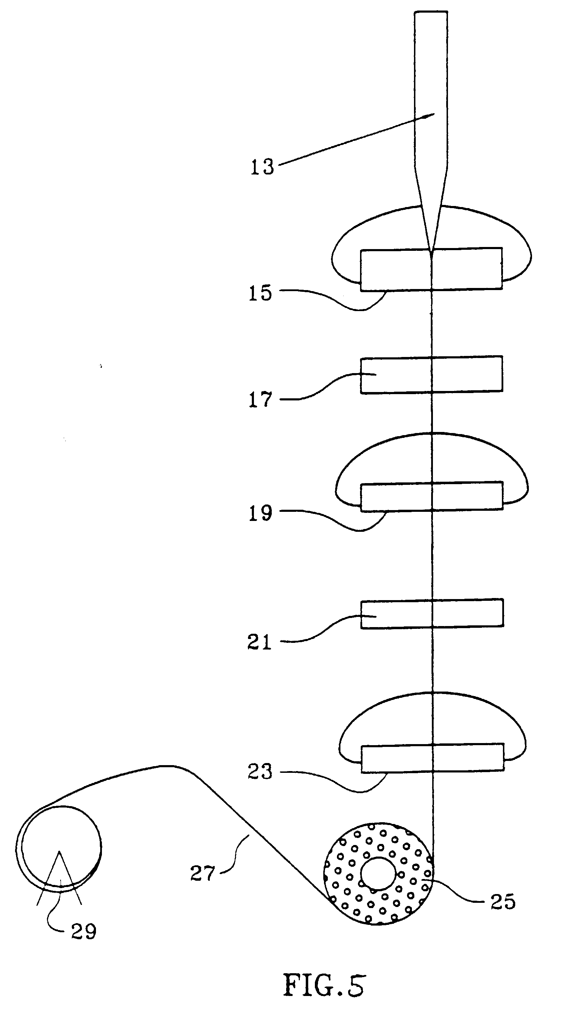

La figure 5 représente un procédé de fabrication d'une fibre optique conforme à la figure 2.

Un préforme cylindrique 13 est filé dans un four 15 afin d'obtenir un guide de lumière de diamètre désiré, par exemple égal à 125 µm.

Immédiatement après l'étirage du guide de lumière, un dispositif 17 permet d'appliquer une fine couche, par exemple de 10 à 100 µm d'épaisseur, d'un matériau peu adhérent permettant de faire le dénudage, par exemple un époxy acrylate réticulable aux UV. En effet, la silice doit être nue et propre pour permettre le collage ou le sertissage du guide de lumière dans une ferrule de connecteur.

Le dispositif 17 est tel qu'il permet le dépôt du matériau précité à grande vitesse (défilement du guide de lumière : 100-600 m/min) par pression ou par trempé. Le procédé par trempé consiste à faire passer le guide de lumière dans une filière qui contient le matériau à déposer. Le procédé par pression présente l'avantage d'éviter la formation de bulles d'air dans le matériau déposé, car ce dernier est appliqué sous la poussée d'un gaz neutre (typiquement du N₂) qui est injecté à travers la filière.

Après que le matériau permettant de faire le dénudage ait été appliqué sur le guide de lumière, il est réticulé de façon appropriée. Par exemple, dans le cas où le matériau appliqué est un époxy acrylate, la fibre est passée dans un four à ultraviolets 19 d'une puissance de 120 W/cm.

Une couche protectrice d'un oligomère de polydiène époxydé est ensuite appliquée sur le premier revêtement, également par pression ou trempé (dispositif 21), avec différents additifs tels que des diluants réactifs, des agents mouillants, des colorants, des sels photoamorceurs, etc. ... Cette couche est alors réticulée, par exemple par irradiation UV (four à ultraviolets 23).

La fibre optique 27 munie des deux couches de revêtement est ensuite guidée vers un dispositif de bobinage 29 de la fibre sur un mandrin.

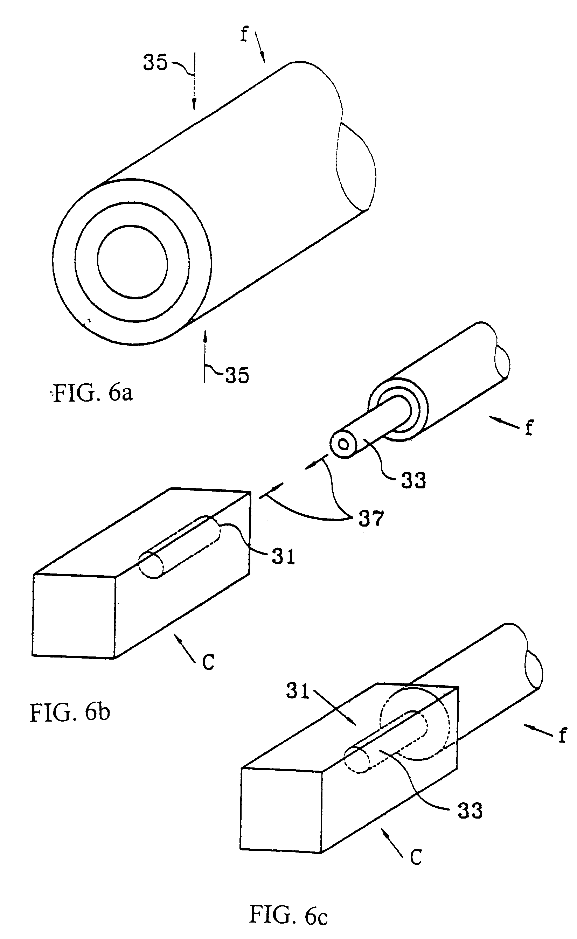

Sur les figures 6a à 6c, on a représenté un procédé selon la présente invention consistant à équiper une fibre f selon la présente invention d'un connecteur c standardisé muni d'une cavité cylindrique 31 de réception de l'extrémité 33 de la fibre optique.

Bien que l'insertion d'une extrémité munie de la gaine ne sorte pas du cadre de la présente invention, l'exemple avantageux illustré sur les figures 6a à 6c met en oeuvre un connecteur c de type ST commercialisé, par exemple, par AMPHEMOL, AMP, MOLEX ou encore SOCAPEX, dont la cavité cylindrique 31 a un diamètre interne sensiblement égal au diamètre externe du guide de lumière, par exemple égal à 125 µm, et dont la longueur est égale à 3 à 4 mm.

Dans un tel cas, on effectue l'ablation des revêtements de protection 7,9 et/ou 11 sur la longueur désirée de l'extrémité de la fibre f.

Avantageusement, l'ablation s'effectue mécaniquement en exerçant des forces de cisaillement symbolisées par les flèches 35 sur la figure 6a, ces forces étant par exemple appliquées avec une pince de dénudage, commercialisée par exemple par SIEMENS (non représenté sur la figure).

L'ablation mécanique de l'extrémité du revêtement est facilitée par la présence d'une couche radialement interne 11 dont l'adhérence au guide de lumière est inférieure à l'adhérence que présenterait la couche radialement externe 9 si elle était directement appliquée sur la surface externe du guide de lumière 1, notamment en silice.

En variante, on effectue l'ablation du ou des revêtements de protection 7, 9 et/ou 11 thermiquement par pyrolyse ou encore par attaque chimique sélective de ces revêtements, par exemple en trempant l'extrémité de la fibre dans un bac de réactif attaquant les revêtements sans affecter le guide de lumière.

L'axe de l'extrémité 33 de la fibre optique f selon la présente invention est aligné avec l'axe de la cavité 31 du connecteur c puis on rapproche, selon les flèches 37 (figure 6b), la fibre f du connecteur c (et/ou vice et versa) jusqu'à l'obtention de la connexion illustrée sur la figure 6c, sur laquelle l'extrémité 33 de la fibre f se trouve dans la cavité 31. La fibre est ensuite verrouillée, si nécessaire, par des moyens de type connu pour éviter un retrait involontaire de l'extrémité 33 de la cavité 31.

Ainsi que cela ressort de ce qui précède, l'invention ne se limite nullement à ceux de ses modes de mise en oeuvre, de réalisation et d'application qui viennent d'être décrits de façon plus explicite ; elle en embrasse, au contraire, toutes les variantes qui peuvent venir à l'esprit du technicien en la matière, sans s'écarter du cadre, ni de la portée, de la présente invention.

En particulier, bien qu'aucune indication n'ait été donnée au sujet de la source de rayons UV, il va de soi que celle-ci peut être constituée par au moins une rampe d'éclairage en UV, de puissance appropriée.

## Revendications

1. Fibre munie d'un revêtement de protection (7), caractérisée en ce que ledit revêtement de protection (7) comporte au moins une couche d'un oligomère de polydiène époxydé réticulé (9).

2. Fibre selon la revendication 1, caractérisé en ce que l'épaisseur de ladite couche d'un oligomère de polydiène époxydé réticulé (9) est comprise entre 20 et 60 µm, de préférence entre 20 et 40 µm.

3. Fibre selon la revendication 1 ou la revendication 2, caractérisée en ce que ladite fibre est une fibre optique en silice comportant un guide de lumière (1).

4. Fibre selon la revendication 3, caractérisée en ce que ledit guide de lumière est réalisé en silice dopée au germanium.

5. Fibre selon la revendication 1 ou la revendication 2, caractérisée en ce que ladite fibre est une fibre optique en plastique comportant un guide de lumière (1).

6. Fibre selon l'une quelconque des revendications 1 à 5, caractérisée en ce que ledit revêtement de protection (7) comporte, disposée entre ladite fibre et ladite couche d'un oligomère de polydiène époxydé réticulé (9), au moins une couche (11) réalisée en un matériau réticulé dont l'adhérence à la fibre est inférieure à l'adhérence à la fibre dudit oligomère de polydiène époxydé réticulé et qui est compatible avec ce dernier.

7. Fibre selon la revendication 6, caractérisée en ce que ladite couche (11), réalisée en un matériau réticulé dont l'adhérence à la fibre est inférieure à l'adhérence à la fibre dudit oligomère de polydiène époxydé réticulé et qui est compatible avec ce dernier, est réalisée en un matériau réticulé aux UV sélectionné dans le groupe constitué par un époxy acrylate et un oligomère de polydiène semi-adhérent.

8. Fibre selon la revendication 6 ou la revendication 7, caractérisée en ce que l'épaisseur de ladite couche (11), réalisée en un matériau réticulé dont l'adhérence à la fibre est inférieure à l'adhérence à la fibre dudit oligomère de polydiène époxydé réticulé et qui est compatible avec ce dernier, est comprise entre 10 et 100 µm, de préférence entre 20 et 60 µm.

9. Fibre selon l'une quelconque des revendications 1 à 8, caractérisée en ce que ledit revêtement de protection (7) est muni d'un marquage par un colorant.

10. Fibre selon la revendication 9, caractérisée en ce que ledit colorant est incorporé dans la couche d'un oligomère de polydiène époxydé réticulé (9).

11. Fibre selon la revendication 9, caractérisée en ce que ledit marquage par un colorant est réalisé par la présence d'une couche de colorant (10) immédiatement voisine de ladite couche d'un oligomère de polydiène époxydé réticulé (9) et disposée de façon radialement interne par rapport à ladite couche d'un oligomère de polydiène époxydé réticulé (9).

12. Fibre selon la revendication 11, caractérisée en ce que ladite couche de colorant (10) comprend un colorant incorporé dans de l'époxy acrylate réticulé aux UV.

13. Fibre selon la revendication 11 ou la revendication 12, caractérisée en ce que l'épaisseur de ladite couche de colorant (10) est comprise entre 3 et 10 µm.

14. Fibre selon la revendication 9 ou la revendication 11, caractérisée en ce qu'elle comprend :
- un guide de lumière (1),
- au moins une couche, radialement la plus externe, d'un oligomère de polydiène époxydé réticulé (9),
- au moins une couche (11), disposée sur ledit guide de lumière (1) et radialement la plus interne, réalisée en un matériau réticulé dont l'adhérence au guide de lumière est inférieure à l'adhérence au guide de lumière dudit oligomère de polydiène époxydé réticulé et qui est compatible avec ce dernier, et
- une couche de colorant (10) telle que définie dans la revendication 12 ou dans la revendication 13, disposée entre ladite couche (11) réalisée en un matériau réticulé dont l'adhérence au guide de lumière est inférieure à l'adhérence au guide de lumière dudit oligomère de polydiène époxydé réticulé et qui est compatible avec ce dernier, et ladite couche d'un oligomère de polydiène époxydé réticulé (9).

15. Câble, caractérisé en ce qu'il comprend au moins une fibre selon l'une quelconque des revendications précédentes, entourée d'une gaine de protection.

16. Câble multifibres, caractérisé en ce qu'il comprend au moins deux fibres optiques colorées selon l'une quelconque des revendications 9 à 13 entourées d'une gaine de protection, chaque fibre optique étant colorée, sur toute sa longueur, avec un colorant différent, de manière à permettre l'identification de chaque fibre aux extrémités dudit câble.

17. Procédé de fabrication d'une fibre selon l'une quelconque des revendications 1 à 14, caractérisé en ce qu'il comprend au moins une étape de dépôt sur une fibre d'une couche d'un oligomère de polydiène époxydé (9), ledit dépôt étant suivi d'une étape de réticulation de cette couche.

18. Procédé selon la revendication 17, caractérisé en ce que l'étape de dépôt sur ladite fibre d'une couche d'un oligomère de polydiène époxydé (9) est précédée d'une étape d'étirage de ladite fibre.

19. Procédé selon la revendication 18, caractérisé en ce que les étapes successives d'étirage de la fibre, de dépôt sur la fibre d'une couche d'un oligomère de polydiène époxydé (9) et de réticulation de cette couche sont réalisées en un processus continu.

20. Procédé selon l'une quelconque des revendications 17 à 19, caractérisé en ce qu'il comprend une première étape de dépôt sur ladite fibre d'une couche d'un oligomère de polydiène époxydé (9) et une deuxième étape de dépôt d'une couche d'un oligomère de polydiène époxydé, sur la couche précédemment déposée.

21. Procédé selon la revendication 20, caractérisé en ce que chaque étape de dépôt sur ladite fibre d'une couche d'un oligomère de polydiène époxydé (9) est suivie d'une étape de réticulation de cette couche, antérieurement au dépôt de la couche suivante.

22. Procédé selon l'une quelconque des revendications 17 à 21, caractérisé en ce que l'on dépose sur ladite fibre une composition qui comprend l'oligomère de polydiène époxydé, ainsi qu'au moins un sel photoamorceur et éventuellement un diluant réactif, et en ce que l'étape de réticulation est une photopolymérisation cationique effectuée par irradiation UV.

23. Procédé selon la revendication 22, caractérisé en ce que la quantité de sel photoamorceur est au maximum de 10 parties en poids pour 100 parties de l'oligomère de polydiène époxydé.

24. Procédé selon la revendication 23, caractérisé en ce que la quantité de sel photoamorceur est comprise entre 0,01 et 10 parties en poids pour 100 parties de l'oligomère de polydiène époxydé.

25. Procédé selon l'une quelconque des revendications 17 à 24, caractérisé en ce que, préalablement au dépôt sur ladite fibre d'une couche d'un oligomère de polydiène époxydé (9), le procédé comprend au moins une étape de dépôt d'une couche de revêtement (11) comportant un matériau dont l'adhérence à ladite fibre est inférieure à celle de l'oligomère de polydiène époxydé réticulé et qui est compatible avec l'oligomère de polydiène époxydé, suivie d'une étape de réticulation dudit matériau.

26. Procédé selon la revendication 25, caractérisé en ce qu'il comprend une première étape de dépôt sur ladite fibre d'une couche de revêtement (11), comportant un matériau dont l'adhérence à ladite fibre est inférieure à celle de l'oligomère de polydiène époxydé réticulé et qui est compatible avec l'oligomère de polydiène époxydé, et une deuxième étape de dépôt d'une couche de revêtement (11), comportant un matériau dont l'adhérence à ladite fibre est inférieure à celle de l'oligomère de polydiène époxydé réticulé et qui est compatible avec l'oligomère de polydiène époxydé, sur la couche précédemment déposée.

27. Procédé selon la revendication 26, caractérisé en ce que chaque étape de dépôt sur ladite fibre d'une couche de revêtement (11) est suivie d'une étape de réticulation de ce revêtement, antérieurement au dépôt de la couche suivante.

28. Procédé selon l'une quelconque des revendications 25 à 27, caractérisé en ce que l'étape de réticulation est effectuée par irradiation UV.

29. Procédé selon l'une quelconque des revendications 17 à 24, caractérisé en ce qu'il comprend en outre, préalablement au dépôt d'une couche d'un oligomère de polydiène époxydé (9), une étape de dépôt d'une couche de colorant (10).

30. Procédé selon l'une quelconque des revendications 25 à 28, caractérisé en ce qu'il comprend, postérieurement au dépôt de ladite couche (11) réalisée en un matériau réticulé dont l'adhérence à la fibre est inférieure à l'adhérence à la fibre dudit oligomère de polydiène époxydé réticulé et qui est compatible avec ce dernier, et antérieurement au dépôt de ladite couche d'un oligomère de polydiène époxydé (9), une étape de dépôt d'une couche de colorant (10).

31. Procédé selon l'une quelconque des revendications 17 à 30, caractérisé en ce que l'on fait passer la fibre munie d'au moins une couche d'un oligomère de polydiène époxydé dans une source d'irradiation UV ayant une longueur comprise entre 15 et 25 cm.

32. Procédé selon l'une quelconque des revendications 17 à 31, caractérisé en ce que, lors dudit dépôt sur la fibre des différentes couches de revêtement, la fibre défile à une vitesse comprise entre 100 et 600 m/min.

33. Procédé selon l'une quelconque des revendications 17 à 32, caractérisé en ce que ladite fibre est une fibre optique comportant un guide de lumière (1) et en ce que ledit procédé débute par une étape d'étirage dudit guide de lumière (1) à partir d'un préforme en matière transparente, dans un four d'étirage.

34. Procédé de réalisation d'un dispositif d'interconnexion à fibres optiques comportant une fibre optique (f) munie, à au moins l'une de ses extrémités (33), d'un connecteur (c) et comprenant un guide de lumière (1) dont le diamètre externe est sensiblement égal au diamètre interne du connecteur, caractérisé en ce qu'il comprend :
- une étape de fabrication d'une fibre optique (f) comportant un guide de lumière (1) muni d'un revêtement de protection (7) comportant au moins une couche d'un oligomère de polydiène époxydé réticulé (9) ainsi qu'au moins une couche (11), disposée entre le guide de lumière (1) et la couche d'un oligomère de polydiène époxydé réticulé (9), réalisée en un matériau réticulé dont l'adhérence au guide de lumière est inférieure à l'adhérence au guide de lumière de l'oligomère de polydiène époxydé réticulé et qui est compatible avec l'oligomère de polydiène époxydé,
- une étape d'obtention, à au moins l'une des extrémités (33) de la fibre optique, d'un guide de lumière (1) de diamètre externe sensiblement égal au diamètre interne du connecteur (c), par ablation mécanique, à l'une des extrémités de la fibre optique, du revêtement de protection (7),
- une étape d'insertion de l'extrémité (33) dénudée du guide de lumière dans le connecteur (c).

35. Procédé selon la revendication 34, caractérisé en ce qu'il met en oeuvre un câble selon la revendication 15 ou la revendication 16 et en ce qu'il comporte les étapes suivantes :
- identification, par sa couleur, d'une fibre optique à une première extrémité du câble,
- insertion de la fibre ainsi identifiée dans un premier connecteur,
- identification, à la seconde extrémité du câble, par sa couleur, de la seconde extrémité de ladite fibre,
- insertion de ladite seconde extrémité de ladite fibre dans un second connecteur.
